# EUROPEAN PATENT APPLICATION

(11) **EP 1 254 879 A2**
(43) Date of publication of application: **06.11.2002**
(21) Application number: 02380089.9
(22) Date of filing: 22.04.2002
(51) Int. Cl.: C05G 3/00

(54) **Complex organic-mineral fertilizers**

(30) Priority: 23.04.2001 ES 200100935
(71) Applicant: Enmiendas y Abonos Organicos, S.L., 28015 Madrid (ES)
(72) Inventor: Delgado Puche, Juan, 28015 Madrid (ES)
(74) Representative: Elzaburu, Alberto de

(57) **Abstract**

Complex organic-mineral solid and/or liquid fertilizers, comprising commonly used inorganic components and synthetic organic components, characterized in that said synthetic organic components are selected from among the group comprised of mono- and poly-sulfonates and/or sulfates.

## Description

The object of the invention are new complex organic-mineral fertilizers having outstanding agronomic properties, the novelty of which lies in the organic matter thereof, which improves the structure of the soil and are slowly transformed by a humidification process into humic acids, which act directly on the mineral compounds of the soil, chelating numerous mineral elements and making them available to the plants. Additionally, the plants can easily assimilate the inorganic nutrient elements of these fertilizers, such as nitrogen, phosphorus, potassium etc.

### BACKGROUND OF THE INVENTION AND DISCUSSION OF PRIOR ART

Compared to traditional mineral fertilizers, which were introduced *en masse* at the end of the 1940's, the appearance of organic-mineral fertilizers, as a solution providing a balance between mineral fertilizers and exclusively organic fertilizers touted by ecological and naturalist groups, has represented an important advance in supplying the required nutrients to plants. However, not all the needs and requirements of said mineral-organic fertilizers have been met. One of the drawbacks of many currently-available organic-mineral fertilizers is that the organic components thereof are not environmentally safe, which requires that during the manufacturing process thereof the organic part must be subjected to a series of chemical transformations meant to ensure the harmlessness thereof, but without affecting the function thereof of providing the organic and inorganic nutrients required by plants. A high percentage of this organic matter consists of byproducts or waste of industrial processes that use plants, such as byproducts of paper mills as in US Patent 4,180,392, waste of olive mills as in Spanish Patent 2,103,206 which uses vegetable water/marc, or waste from animal farms such as in chicken farms (Russian Patent 2,110,993), beef production plants and the like. There is therefore a need for a synthesis organic matter with a composition that can be controlled so that the fertilizer has the properties related in the first paragraph while at the same time the presence of pollutants is prevented and the overall process cost for obtaining the fertilizers is reduced.

Known to prior art is the use of sulfonates and organic sulfates in small concentrations as additives to improve the formulation of fertilizers. Thus, for example, Chinese Patent 1,127,591 recommends the use of surfactants, specifically sodium dodecyl-benzene-sulfonate in concentrations of 0.7-2.5%. Chinese patent 1,240,776 recommends using mixtures of anionic surfactants to prevent compacting of superphosphate type fertilizers. Among the anionic surfactant agents cited are sulfates of oxyethylenated alcohols in a concentration of 30-60% in the anti-caking additive. Chinese patent 1,176,954 describes a fertilizer containing about 0.1% by weight of sodium dodecyl-benzene-sulfonate. Japanese patent application JP 2000128684 recommends coating the fertilizer particles with a polyurethane film containing an diatomeous earth or amorphous silica, and optionally surfactants, among which is sodium dodecyl-benzene-sulfonate. Thus, the use of organic sulfonates and sulfates in the prior art has been restricted in the application thereof as additives to fertilizers, in small concentrations, in order to modify the physical-chemical properties thereof, mainly to prevent caking of the solid fertilizers, and its own merit as an organic fertilizer material has not been recognized.

Likewise, Patents EP-0568345, WO9217422, US 4979980, US 4997470 and US 5006147 recommend encapsulating fertilizers with a film containing sulfonated polymers. These relate to synthetic polymers that are beyond the scope of this invention.

### DETAILED DESCRIPTION OF THE INVENTION

The organic-mineral fertilizers of the present invention are obtained in a simple and inexpensive manner by treatments of sulfonation and/or sulfatation of natural products, such as fatty alcohols, ethoxylated fatty alcohols, fatty acids, vegetable and animal oils and fats, refined petroleum fractions for joint production of technical and medicinal white oils and sulfonation of linear alkyl-benzenes.

The complex organic-mineral fertilizers obtained according to the invention differ from currently known and used fertilizers and are characterized in that the base organic matter used in the formulation thereof consists of organic sulfonates and/or sulfates of natural products and/or the mixtures thereof; specifically, sulfates of fatty alcohols and ethoxylated fatty alcohols, sulfonates and sulfates of fatty acids and vegetable or animal oils and fats. In addition, the organic matter used in the formulation thereof may consist of complex sulfonates obtained by sulfonation of refined petroleum oils to obtain technical and medicinal white oils, and of linear alkyl-benzene-sulfonates and/or the mixtures thereof, or the mixtures of these sulfonates with the sulfates and/or sulfonates of the natural products mentioned above.

The applicant firm has discovered that complex organic-mineral fertilizers which as inorganic components contain nitrogen, phosphorus, potassium etc. and as organic components contain sulfonates/sulfates of natural products such as fatty alcohols, ethoxylated fatty alcohols, fatty acids, vegetable or animal oils and fats and/or complex sulfonates obtained by sulfonation of oils to obtain technical and medicinal white oils, and/or linear alkyl-benzene-sulfonates, show excellent agronomical properties. Without being bound to any particular theory, it is believed that these sulfonates and/or sulfates or the mixtures thereof may contribute efficiently to the mobilization of inorganic products, including those in the soil, facilitating the assimilation thereof by plants. Products derived from natural raw materials ,both vegetable and animal, are biodegradable. In addition and as stated in Chemosphere, 36, (6), 1319-1343 (1998), linear alkyl benzene sulfonates present no health hazards for people in indirect exposure through water or food, and the use thereof represents no danger to other land organisms such as plants or invertebrates. Thus, the sulfonates and/or sulfates included in the formulation of the fertilizers of the invention are biodegradable and compatible with the environment.

Sulfates of fatty alcohols and of ethoxylated fatty alcohols suitable for the scope of the present invention have the formulae ROSO₃M and RO(C₂H₄O)ₓSO₃M respectively, where R is an alkyl or alkenyl group with approximately 8 to 22 carbon atoms, x is an integer between 1 and 10, preferably between 1 and 4, and M is a cation such as ammonium, sodium, potassium, magnesium, calcium, etc. Sulfates of ethoxylated alcohols suitable for the scope of the present invention are products of the condensation of ethylene oxide and mono- or poly-hydroxyl alcohols containing approximately between 8 and 22 carbon atoms, treated with sulfuric acid, oleum or sulfur trioxide by known methods. Specific examples of the sulfates are ammonium lauryl sulfate, potassium lauryl sulfate, magnesium lauryl sulfate, potassium oleylsulfate, potassium oleyl monoethoxysulfate, etc.

Other products suitable as the organic matter in the formulation of fertilizers according to the invention are the salts of sulfonation products of fatty acids and vegetable oils and animal fats which can consist mainly of organic sulfates and sulfonates.

The sulfonation methods for these products are well known. Thus, sulfonation of castor oil can be performed with concentrated sulfuric acid in a period of several hours at 25-30°C. Usually 15-30% by weight of sulfuric acid is used. At the end of the reaction the product is neutralized with a solution of an alkali of choice. In these conditions, sulfonation of castor oil produces preferably sulfuric ester by esterification of the hydroxyl group of ricinoleic acid. Varying the reaction conditions allows favoring addition of sulfuric acid to the double bonds and eventually the formation of sulfonic acids. Thus, the nature of the reaction products depends, of course, on the reaction conditions and on the nature and concentration of the sulfonating agent, generally concentrated sulfuric acid, oleum, sulfur trioxide or chlorosulfonic acid. A careful choice of these parameters allows favoring the formation of sulfonic acids, sulfuric acid esters and even formation of polysulfonated products. These polysulfonated products generally show a greater solubility in water and the presence thereof is favorable in the formulation of fast action fertilizers. Sulfonation/sulfation of fatty acids is similar to that of vegetable oils and animal fats. Examples of vegetable and animal fats suitable for preparing sulfates and sulfonates of vegetable oils and animal fats suitable in the scope of the invention are olive oil, sunflower seed oil, colza oil, castor oil, soy oil, animal lard, etc. Examples of fatty acids which can be used as raw material for this invention are oleic acid, linoleic acid, ricinoleic acid, palmitic acid, stearic acid, 10-undecylenic acid, etc.

Other sulfonic acids suitable for preparing sulfonates that can be used in the scope of this invention are those formed as byproducts in production processes of white oils. These processes use refined petroleum fractions as a raw material, with high paraffin content, and from which polyaromatic hydrocarbons have been eliminated previously by extraction with solvents. This raw material is subjected to sulfonation, usually with sulfuric acid, sulfur trioxide or oleum. The sulfonating agent, usually sulfur trioxide, reacts with some components of the fraction to form sulfonic acids. In addition to the main reaction the naphthenes contained in the petroleum fraction can be dehydrogenated and then sulfonated. Additionally, sulfur trioxide MAY oxidize hydrocarbons to form oxygenated sulfonic acids. Sulfonation reactions may also take place to form polysulfonic acids. Therefore, the reaction product is a complex mixture of numerous sulfonic acids. Monosulfonic acids with long aliphatic chains are soluble in oils and poorly soluble in water (mahogany acids), while disulfonic acids and monosulfonic acids with short aliphatic chains (green acids) are insoluble in oils, are highly hydrophilic and may be separated by settling the sulfonation product. The relative amounts of these three components depends mainly on the reaction conditions: a long time and high temperature of reaction, and excess sulfur trioxide used in the sulfonation favor the formation of green acids. These sulfonic acids are converted into sulfonates by neutralization. All of these sulfonic acids are suitable for the scope of the present invention and the proportion thereof in the final product is selected depending on the nature of the fertilizer to be produced. If a fast action fertilizer is desired, sulfonates will be chosen prepared from sulfonic acids with a high green acid content, which due to the high water solubility thereof interacts with plants quickly. If longer-term fertilizers are desired sulfonates will be chosen with a high content in mahogany acids. Due to the lower solubility thereof in water, these sulfonates remain in the soil for longer period and carry out the activity thereof more slowly and over a longer time.

Other suitable sulfonates within the scope of the invention are linear alkyl benzene sulfonates. These products, and specifically sodium dodecyl benzene sulfonate, are widely used nowadays in the formulation of biodegradable detergents. They are obtained by sulfonation of linear alkyl benzenes, generally with gaseous mixtures containing sulfur trioxide, by methods well known in the art. Depending on the reaction conditions, such as temperature, contact time, concentration of sulfur trioxide in the gas, SO₃/hydrocarbon ratio, etc. it is possible to favor formation of monosulfonic or polysulfonic acids.

In another embodiment of the invention the organic components can be organic matter that is currently considered a byproduct of industrial processes and procedures, and which must be eliminated by costly methods such as incineration, wet oxidation, biological treatment and others, in all cases producing carbon dioxide, a gas responsible for the greenhouse effect. Thus, the procedure object of the invention allows an agronomical use of these organic byproducts and contributes effectively to sustainable growth. Therefore, it is possible within the scope of the present invention to use both monosulfonates and polysulfonates. In general, polysulfonates are more soluble in water and are preferred in the formulation of fast action fertilizers, while linear alkyl benzene-monosulfonates are less soluble in water and are preferred in the formulation of long term duration fertilizers.

The concentration of sulfates/sulfonates in the fertilizers of the invention is not critical, and may vary in a range from 5% to 80%, and preferably from 10 to 40% by weight. With concentrations below 5% the desired results are generally not obtained. It is not advisable to use fertilizers with concentrations of sulfates/sulfonates above 80% unless used together with another conventional inorganic fertilizer that provides the other inorganic nutrients required for plant growth.

The inorganic raw materials used to prepare the organic-mineral fertilizers of the present invention are those used to make currently available inorganic fertilizers. Thus, for example, as a phosphorous-containing raw material can be used phosphated rocks, phosphoric acids or the anhydrides thereof, and in general all inorganic substances containing phosphorus that can be assimilated by plants, such as ammonium phosphate, ammonium polyphosphate, phosphoric acid and its alkali salts and earth-alkali salts and the like, and the mixtures thereof . As potassium raw material hydroxides, chlorides, sulfates or phosphates of potassium and the like can be used. As nitrogenated raw materials can be used dry ammonia, ammonia solutions, urea, ammonium nitrate, and in general any nitrogenated compound that does not cause instability of the fertilizer. It is also possible to use other oligoelements in the scope of the invention, as is known in the art.

The fertilizers object of the invention can be prepared by mixing the various components by known methods. Both solid and liquid fertilizers can be produced. Thus, for example, a mixture of sulfonates/sulfates and inorganic nutrients can be made in dry conditions, in the presence of binding agents, until the desired particle shape is obtained. It can also be made with an aqueous solution of the sulfonates/sulfates, to which are added the inorganic nutrients in the form of water-soluble salts. In this way it is possible to obtain liquid fertilizers. If so desired, the fertilizers can be obtained in the form of aqueous emulsions and/or dispersions, when one of the components of the mixture is not fully soluble in water. In general, preparation of these aqueous dispersions does not require the addition of further dispersion agents due to the presence of sulfates/sulfonates used in the scope of the invention that generally show surface activity. However, it is possible if desired to use small amounts of emulsifiers and ionic and non-ionic dispersants, in order to obtain a greater stability of the emulsion and/or dispersion. In each specific case, any expert should be capable of determining the amount of emulsifiers and dispersers to be used depending on the nature thereof and the desired stabilization effect.

The fertilizers object of this invention can be used for all currently cultured crops, including those used for reforestation and regeneration of pastures. The forms of application are those used conventionally.

The following examples illustrate the invention without limiting it, in the understanding that the scope of the invention is only limited by the appended claims.

### Example 1

This example relates to the preparation of a liquid fertilizer. In a reactor provided with a shaker are introduced 10 kg. of lauryl sulfate prepared by sulfonation of lauryl alcohol and 10 kg. of monosulfonic/polysulfonic acids obtained by sulfonation with sulfur trioxide of a petroleum fraction, in order to obtain a white medicinal oil. To the mixture thus obtained are successively added phosphoric acid, water, urea, ammonia and KOH until a pH of 6.5 is obtained. The final product obtained in the form of an aqueous solution contained 12% nitrogen, 4% P₂O₅, 6%K₂O and 20% organic matter.

### Example 2

This example also relates to the preparation of a liquid fertilizer. In a reactor provided with a shaker are introduced 10 kg. of lauryl sulfate prepared by sulfonation of lauryl alcohol and 10 kg. of monosulfonic/polysulfonic acids obtained by sulfonation with sulfur trioxide of a petroleum fraction, in order to obtain a white medicinal oil. To the mixture thus obtained are successively added water and KOH until a pH of 6.5 is obtained. The final product obtained in the form of an aqueous solution contained 4% K₂O and 40% organic matter.

### Example 3

This example relates to a trial performed in citric crops [fine lemon (*limón fino)*and navelina orange (*naranja navelina*) in the municipality of Albatera (Murcia), grown with drip irrigation using the fertilizer prepared as described in example 2. The doses used in both cases were identical (150 cm³/adult tree) and at the time when commercial humic acids are normally applied, that is, 70% of the dose in the spring/summer and the remaining 30% in the fall.

These studies led to the conclusion that the product behaves similar to controls treated with the same dose of commercial humic acid, but it should be remarked that a greater percentage of early fruit was obtained than in the control, that is, greater size, greater uniformity and in the case of the oranges a greater degree of sugar, making them more attractive to buyers. The general state of the trees did not show symptoms of fatigue due to harvest, which in the treated trees was 150 kg average in navelina orange trees and 260 kg in fine lemon trees. It was found that the new shoots appearing in the trees were stronger than in the control trees, which is a clear symptom of good nutrition.

Similar results were obtained for tomatoes, peas and lettuce and for grass. In the last case a stimulant and greening effect was observed, as well as a regulation of growth, implying a lower handling of the crop as the reaping could be spaced more widely due to the slower growth and the greater sturdiness of the plants.

## Claims

1. Complex organic-mineral solid and/or liquid fertilizers, comprising commonly-used inorganic components and synthetic organic components, **characterized in that** said synthetic organic components are selected from among the group comprised of mono- and poly-sulfonates and/or sulfates of natural products, such as mono- and poly-sulfonates and/or sulfates of fatty alcohols, ethoxylated fatty alcohols, fatty acids, vegetable and animal oils and fats, and/or complex sulfonates obtained as byproducts in the manufacture of white technical and medicinal oils and/or linear alkyl benzene-mono- or polysulfonates.

2. Fertilizers according to claim 1, **characterized in that** the organic components are mixtures of mono- and poly-sulfonates and/or sulfates.

3. Fertilizers according to claims 1 and 2, **characterized in that** the concentration of mono- and poly-sulfonates/sulfates in the fertilizers lies between 5 and 80% by weight, and more preferably between 10 and 40% by weight with respect to the total composition.

4. Fertilizers according to any of the previous claims, **characterized in that** they are fast action fertilizers that contain poly-sulfonates as the organic matter.

5. Fertilizers according to any of the previous claims, **characterized in that** they are long term duration fertilizers that contain mono-sulfonates as the organic matter.

6. Fertilizers according to any of the previous claims, **characterized in that** its organic components can be organic materials which are currently considered byproducts of industrial processes or procedures, and which must be eliminated by costly methods such as incineration, wet oxidation, biological treatments and others, and in all cases with production of carbon dioxide, a gas responsible for the greenhouse effect.

7. Fertilizers according to any one of the previous claims, **characterized in that** its inorganic components are derived from the raw materials used in its manufacture, selected from the following groups: a) as phosphorous-containing raw materials the following can be used: phosphated rocks, phosphoric acids or the anhydrides thereof, and inorganic substances containing phosphorus that can be assimilated by plants, such as ammonium phosphate, ammonium polyphosphate, phosphoric acid and its alkali salts, alkali-earth salts and the like and mixtures thereof; b) as raw materials for potassium the following can be used: hydroxides, chlorides, sulfates or phosphates of potassium and the like; and c) as nitrogenated raw materials the following can be used: dry ammonia, ammonia solutions, urea, ammonium nitrate and nitrogenated compounds that do not cause the instability of the compound; and d) oligoelements in trace amounts.
